# FASCICULE DE BREVET EUROPEEN

(11) **EP 3 478 547 B1**
(45) Date de publication et mention de la délivrance du brevet: **13.04.2022**
(21) Numéro de dépôt: 17727288.7
(22) Date de dépôt: 10.05.2017
(51) Int. Cl.: B60W 10/18, B60W 30/18, B60T 7/04, B60W 30/184

(54) **DISPOSITIF DE CONTROLE D'UN FREIN DE STATIONNEMENT DE VEHICULE AUTOMOBILE**
KRAFTFAHRZEUGFESTSTELLBREMSENSTEUERUNGSVORRICHTUNG
MOTOR VEHICLE PARKING BRAKE CONTROL DEVICE

(30) Priorité: 04.07.2016 FR 1656369
(43) Date de publication de la demande: 08.05.2019
(73) Titulaire: Renault s.a.s, 92100 Boulogne Billancourt (FR)
(72) Inventeur: RIESENMEY, Fabrice, 91780 Chalo Saint Mars (FR)
(74) Mandataire: Renault Group
(86) Numéro de dépôt international: PCT/FR2017/051111
(87) Numéro de publication internationale: WO 2018/007695

(56) Documents cités:
- EP-A1- 0 995 659
- WO-A1-2006/097583
- WO-A1-2014/063720
- FR-A1- 2 936 206
- GB-A- 2 455 507
- US-A1- 2012 316 034

## Description

L'invention concerne le domaine des dispositifs et des procédés de contrôle d'un frein de stationnement de véhicule automobile.

De manière générale, un véhicule automobile doté d'un frein de stationnement comporte un dispositif de contrôle du frein de stationnement dont la fonction est de piloter le verrouillage ou le déverrouillage du frein de stationnement en fonction d'une instruction de la part du conducteur.

Par exemple, de manière classique, un dispositif de contrôle du frein de stationnement comprend un levier de commande pouvant être actionné par un utilisateur et un détecteur de l'actionnement du levier de commande. Le frein de stationnement comporte un moteur électrique, le dispositif de commande comprenant un module de pilotage du moteur. Le module de pilotage est capable d'envoyer un signal de verrouillage ou de déverrouillage au moteur, en tenant compte de la position du levier détecté par le détecteur. Le moteur actionne le frein de stationnement en fonction du signal reçu.

Pour permettre un bon fonctionnement du frein de stationnement en toutes conditions, les composants mécaniques du frein de stationnement sont généralement conçus pour fonctionner lorsque le véhicule est très chargé, attelé et stationné dans une forte pente.

Cela a toutefois pour conséquence que le déverrouillage du frein de stationnement nécessite un effort important. Il en résulte une plus grande fatigue des composants mécaniques. Par ailleurs, il peut être choisi de surdimensionner les actionneurs du frein de stationnement, tels que le moteur électrique dans l'exemple ci-dessus. Il peut également se produire une surconsommation d'énergie par l'actionneur qui peut même entraîner sa destruction.

Cette solution a par ailleurs pour conséquence l'apparition d'un effet d'arbalète lors du déverrouillage du frein de stationnement sous forte sollicitation. L'effet d'arbalète peut par exemple se produire lorsque le véhicule est particulièrement chargé et stationné en forte pente. Lorsque le frein de stationnement est déverrouillé, les éléments de la chaîne cinématique du véhicule sont brusquement soumis à un déplacement rapide. Il en résulte un bruit inquiétant pour le conducteur et/ou les passagers du véhicule, et une probabilité plus importante de casse de ces éléments.

Par la publication US 2012 31 064, on connaît un système de délestage comprennent un moteur d'entraînement du véhicule, apte à fournir un effort à un élément de la chaîne cinématique lors du déverrouillage du frein de stationnement. Ce système est dépourvu de moyens d'évaluer la valeur du couple de freinage appliqué avant le verrouillage du frein de stationnement.

Au vu de ce qui précède, l'invention a pour but de proposer un dispositif de contrôle d'un frein de stationnement de véhicule automobile palliant les inconvénients précités.

Plus particulièrement, l'invention vise à permettre le contrôle du frein de stationnement en atténuant le bruit et l'usure mécanique résultant lors du déverrouillage du frein de stationnement, en évitant un surdimensionnement des actionneurs mécaniques du frein de stationnement et en limitant la consommation d'énergie au déverrouillage du frein de stationnement.

À cet effet, il est proposé un dispositif de contrôle d'un frein de stationnement de véhicule automobile selon la revendication 1 comprenant un module de pilotage du frein de stationnement apte à bloquer le mouvement d'un élément de chaîne cinématique du véhicule, et une interface de contrôle avec un utilisateur.

Selon une de ses caractéristiques générales, ce dispositif de contrôle comporte en outre un module de détection capable de détecter une intention du conducteur de verrouiller le frein de stationnement et une intention du conducteur de déverrouiller le frein de stationnement, et des moyens de délestage aptes à fournir un effort à un deuxième élément de chaîne cinématique.

Un tel dispositif de contrôle, grâce à son module de détection détectant à la fois une intention de verrouillage et une intention de déverrouillage, permet de mettre en œuvre un effort de délestage par les moyens de délestage afin de limiter l'effort mis en œuvre par les actionneurs, la valeur et les instants de mise en œuvre de l'effort de délestage étant déterminés de manière optimale pour limiter au maximum l'effort mis en œuvre par les actionneurs et éviter l'apparition de l'effet d'arbalète. Le premier et le deuxième éléments de chaîne cinématique peuvent, alternativement, être une seule et même pièce, mobile, appartenant à une chaîne cinématique du véhicule, par exemple celle s'étendant entre les roues motrices et le groupe motopropulseur, ou deux pièces distinctes d'une même chaîne cinématique du véhicule, ou encore deux pièces distinctes de deux chaînes cinématiques différentes du véhicule.

Selon l'invention, le véhicule comprend un groupe motopropulseur doté d'au moins un moteur choisi parmi une machine électrique, un moteur hydraulique et un moteur pneumatique, les moyens de délestage comprenant ledit moteur.

De manière avantageuse, le module de détection comprend un premier moyen de détection d'une intention de la part de l'utilisateur de verrouillage du frein de stationnement, ledit premier moyen de détection étant apte à recevoir au moins un signal choisi parmi un signal d'intensité de freinage, un signal d'accélération, un signal de localisation par satellite et un signal de sens de rotation des roues du véhicule.

De manière préférentielle, le module de détection comprend un deuxième moyen de détection d'une intention de la part de l'utilisateur de déverrouillage du frein de stationnement, ledit deuxième moyen de détection étant apte à recevoir au moins un signal choisi parmi un signal de mise sous tension d'instruments de contrôle du véhicule, un signal d'activation d'un mode dégradé des instruments de contrôle du véhicule, un signal représentatif d'un effort transmis aux moyens d'actionnement et/ou à l'interface de contrôle.

Selon l'invention, les moyens de délestage sont capables de fournir un effort de contrainte hyperstatique au deuxième élément de chaîne cinématique.

Selon l'invention, il est prévu un module de détermination de paramètres relatifs au véhicule automobile et/ou de paramètres relatifs à un groupe motopropulseur du véhicule automobile, les moyens de délestage comprenant un module de calcul apte à déterminer l'effort à appliquer à l'élément de chaîne cinématique en fonction des paramètres déterminés par le module de détermination.

Selon l'invention, le module de détermination comprend un module d'évaluation d'un couple de freinage apte à évaluer un couple de freinage, rapporté en entrée ou sortie de réducteur, et appliqué immédiatement avant le verrouillage du frein de stationnement, un module de mémorisation capable de mémoriser le couple de freinage évalué par le module d'évaluation et un module de réinitialisation apte à réinitialiser le module de mémorisation.

Avantageusement, le module d'évaluation comprend des premiers moyens d'évaluation d'une force de freinage appliquée immédiatement avant le verrouillage du frein de stationnement, des deuxième moyens d'évaluation capables de déterminer un couple de freinage appliqué directement sur un élément de chaîne cinématique à partir de la force de freinage évaluée par les premiers moyens d'évaluation, et des troisièmes moyens d'évaluation capables de calculer un couple en entrée ou sortie de réducteur à partir du couple de freinage déterminé par les deuxièmes moyens d'évaluation.

Dans un autre mode de réalisation, le module de réinitialisation est configuré pour réinitialiser la valeur mémorisée par le module de mémorisation chaque fois que le module de détection détecte une mise en mouvement du véhicule automobile.

Grâce à une telle caractéristique, le délestage du frein de stationnement est automatiquement désactivé dès que le véhicule est mis en mouvement, et ce quelle qu'en soit la raison. Il en résulte une meilleure sécurité.

Selon un autre aspect, il est proposé un procédé de contrôle selon la revendication 7 d'un dispositif tel que défini précédemment, dans lequel on détecte une intention de la part du conducteur de verrouiller le frein de stationnement, on détecte une intention de la part du conducteur de déverrouiller le frein de stationnement, on fournit un effort au deuxième élément de chaîne cinématique en vue du délestage du frein de stationnement entre l'instant de détection de l'intention de la part du conducteur de déverrouiller et l'instant de déverrouillage effectif du frein de stationnement.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente schématiquement un véhicule automobile à propulsion hybride équipé d'un frein de stationnement et d'un dispositif de contrôle selon un exemple de réalisation de l'invention,
- la figure 2 représente schématiquement le dispositif de contrôle de la figure 1,
- la figure 3 illustre l'évolution temporelle de paramètres au cours d'une première étape d'un procédé de contrôle selon l'invention, et
- la figure 4 illustre l'évolution temporelle des mêmes paramètres au cours d'une deuxième étape du procédé de contrôle.

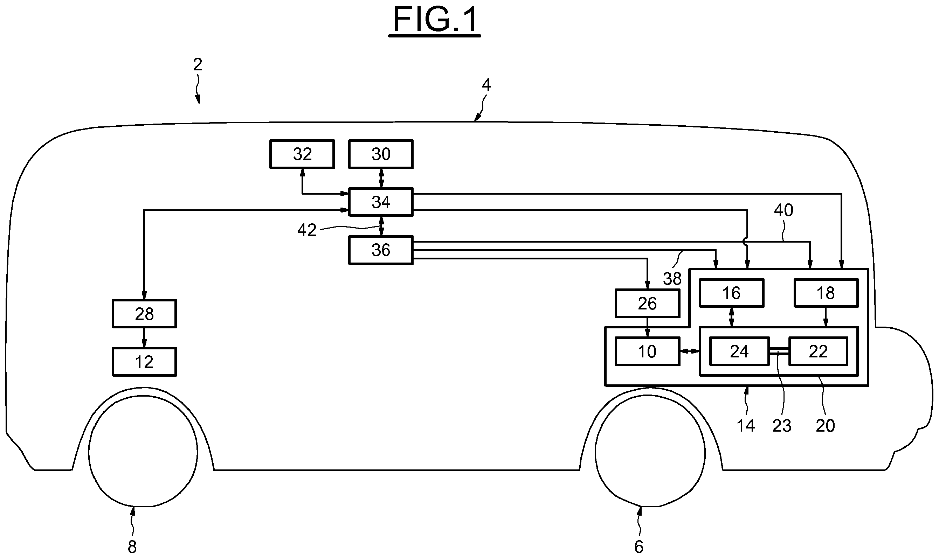

En référence à la figure 1, il est schématiquement représenté un véhicule automobile 2 à transmission hybride électrique - thermique. Le véhicule 2 comporte une caisse 4, une paire de roues motrices 6 et une paire de roues non motrices 8. La paire de roues motrices 6 est solidaire d'un essieu 10 monté rotatif autour d'une direction transversale du véhicule par rapport à la caisse 4. La paire de roues non motrices 8 est solidaire d'un essieu 12 monté rotatif autour d'une direction transversale du véhicule par rapport à la caisse 4.

Le véhicule 2 comprend un groupe motopropulseur 14. Le groupe motopropulseur 14 comprend une machine électrique 16 et un moteur thermique 18. Le groupe motopropulseur 14 comprend en outre une transmission 20 dont la fonction est de répartir l'énergie mécanique entre la machine électrique 16, le moteur thermique 18 et l'essieu 10. Les échanges réversibles d'énergie mécanique entre la machine 16, le moteur 18 et l'essieu 10 sont schématiquement représentés par les flèches sur la figure 1.

La transmission 20 comporte une boîte de vitesse 22 dont la fonction est de répartir la puissance mécanique entre la machine électrique 16, le moteur thermique 18 et un arbre de sortie 23. L'arbre de sortie 23 entraîne un réducteur 24 mécaniquement connecté avec l'essieu 10 solidaire de la paire de roues motrices 6.

Ainsi, dans l'exemple de réalisation illustré, le véhicule 2 est à propulsion hybride électrique - thermique. Toutefois, on peut envisager sans sortir du cadre de l'invention une propulsion différente. En particulier, l'invention s'applique pour tout véhicule à propulsion hybride ou non hybride dont le groupe motopropulseur comporte au moins un moteur doté d'une réserve d'énergie contrôlable. Un tel moteur peut entre autres être une machine électrique, hydraulique ou pneumatique. L'invention peut par exemple concerner un véhicule à propulsion non hybride dont le groupe motopropulseur comprend l'un de ces trois moteurs. Dans un autre exemple, l'invention concerne un véhicule à propulsion hybride hydraulique - thermique ou à propulsion pneumatique - thermique.

Le véhicule 2 comporte un frein de stationnement 26. Le frein de stationnement 26 est capable de bloquer la rotation de l'essieu 10 de la paire de roues motrices 6. Dans toute la présente demande, on entendra, sauf indication contraire, que le frein de stationnement 26 est « verrouillé » lorsqu'il bloque la rotation de l'essieu 10 par rapport à la caisse 4. A l'inverse, on entendra, sauf indication contraire, que le frein de stationnement 26 est « déverrouillé » lorsqu'il ne bloque pas la rotation de l'essieu 10 par rapport à la caisse 4.

Dans l'exemple illustré, le frein de stationnement 26 comporte un moteur d'actionnement électrique (non représenté) entraînant le déplacement en translation d'un doigt de blocage (non représenté). Le doigt de blocage coopère avec une roue de blocage (non représentée) de l'essieu 10 pour pouvoir bloquer sa rotation, lorsque le frein de stationnement 26 est verrouillé.

On peut toutefois, sans sortir du cadre de l'invention, envisager un frein de stationnement comportant un autre type d'actionneur, par exemple un actionneur hydraulique ou un actionneur pneumatique. On peut également, toujours sans sortir du cadre de l'invention, envisager un frein de stationnement à actionnement manuel direct. Un tel frein de stationnement comporte, en tant que dispositif de contrôle du frein de stationnement, des câbles directement reliés à un levier de commande pouvant être manipulé par un conducteur.

Dans l'exemple de réalisation représenté, le frein de stationnement 26 est disposé de sorte à pouvoir bloquer la rotation de l'essieu de la paire de roues motrices du véhicule. Toutefois, on peut envisager sans sortir du cadre de l'invention un frein de stationnement disposé selon un agencement différent, par exemple disposé de sorte à pouvoir bloquer la rotation de l'essieu 12 solidaire de la paire de roues non motrices, ou encore de sorte à pouvoir bloquer la rotation de tout autre élément de chaîne cinématique du véhicule, comme par exemple l'arbre de sortie 23.

Le véhicule 2 comporte un dispositif de freinage 28. Le dispositif de freinage 28 a pour fonction de freiner le véhicule lorsque celui-ci se déplace. Dans l'exemple illustré, le dispositif 28 est apte à ralentir ou à bloquer la rotation de l'essieu 12 solidaire de la paire de roues non motrices 8. On ne sort toutefois pas du cadre de l'invention en envisageant un véhicule équipé d'un dispositif de freinage différent, par exemple apte à ralentir et/ou bloquer la rotation de l'essieu 10 et/ou de l'essieu 12, ou encore de tout autre élément de la chaîne cinématique reliée à l'un d'essieu 10 et 12. En particulier, dans un mode de réalisation en variante, le dispositif de freinage peut comprendre la machine électrique 16 fonctionnant en freinage régénératif.

Le véhicule 2 comporte encore une interface de pilotage 30, qui a pour fonction de permettre à un conducteur de contrôler les différents paramètres de fonctionnement du véhicule automobile. Dans l'exemple illustré, l'interface 30 comporte en particulier un levier de commande (non représenté) du frein de stationnement 26. Dans toute la présente demande, sauf lorsqu'il en est disposé autrement, on entendra que le levier de commande est « actionné » lorsqu'il est déplacé de sorte à commander le verrouillage du frein de stationnement 26.

Dans l'exemple illustré, le véhicule 2 comporte un dispositif de localisation par satellite 32. Un tel dispositif est bien connu et généralement également désigné sous le terme de positionnement global par satellite, ou sous l'abréviation anglo-saxonne GPS.

Le véhicule 2 comporte un ordinateur de bord 34 qui a pour fonction de contrôler l'ensemble des dispositifs permettant le fonctionnement du véhicule 2. Pour ce faire, l'ordinateur de bord 34 est en particulier en liaison d'information avec le groupe motopropulseur 14, avec le dispositif de freinage 28, avec l'interface de pilotage 30 et avec le dispositif de localisation par satellite 32.

Le véhicule 2 comporte par ailleurs un dispositif de contrôle 36 du frein de stationnement 26. Le dispositif de contrôle 36 a pour fonction de piloter le frein de stationnement 26 et de contrôler son bon fonctionnement. Le dispositif de contrôle 36 a encore pour fonction d'appliquer un effort de délestage au frein de stationnement 26, lorsque ce dernier est sur le point d'être déverrouillé. Le dispositif de contrôle 36 est en liaison d'information avec le frein de stationnement 26 comme cela est schématiquement représenté par la flèche 38. Le dispositif de contrôle 36 est par ailleurs en liaison d'information avec le groupe motopropulseur 14, comme cela est schématiquement représenté par la flèche 40. Le dispositif de contrôle 36 est encore en liaison d'information avec l'ordinateur de bord 34, comme cela est représenté schématiquement par la flèche 42.

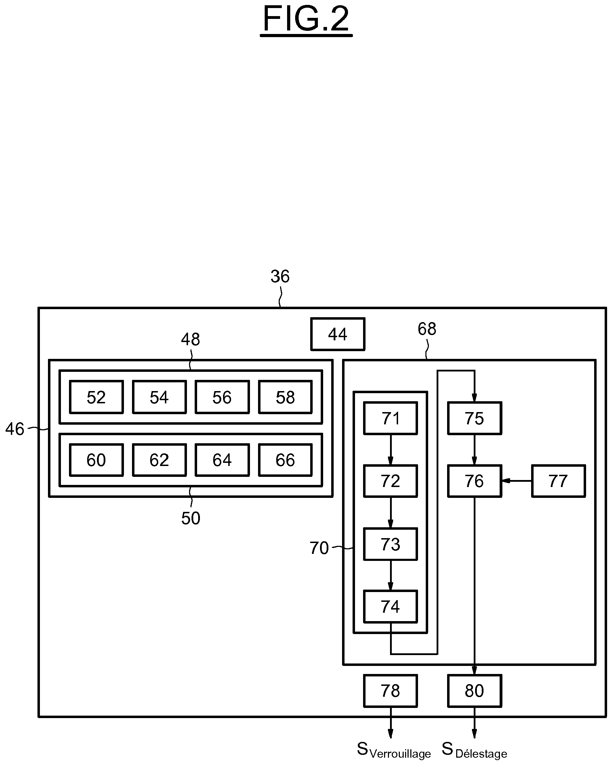

En référence maintenant à la figure 2, le dispositif de contrôle 36 est schématiquement représenté sous la forme d'un rectangle, les composants du dispositif de contrôle 36 étant disposés à l'intérieur de celui-ci.

Le dispositif de contrôle 36 comporte un module de pilotage 78 ayant pour fonction de piloter le verrouillage et le déverrouillage du frein de stationnement 26. Le module de pilotage 78 peut générer un signal de verrouillage S_{Verrouillage} envoyé au moteur d'actionnement (non représenté) du frein 26. Lorsque le moteur d'actionnement reçoit le signal S_{Verrouillage}, il modifie ou maintient la position du doigt (non représenté) de sorte à bloquer la rotation de l'essieu 10. En d'autres termes, le frein de stationnement 26 est alors dans sa position verrouillée. Lorsque le moteur ne reçoit pas le signal S_{Verrouillage}, il modifie ou maintient la position du doigt de sorte à disposer le frein de stationnement 26 dans sa position déverrouillée.

Le dispositif de contrôle 36 comporte un bloc de réception 44 d'un signal de contrôle provenant de l'interface de pilotage 30. En l'espèce, le signal de contrôle est la position du levier de commande de l'interface de pilotage 30 du véhicule 2.

Le dispositif de contrôle 36 comporte par ailleurs un module de détection 46 ayant pour fonction de détecter une intention de la part du conducteur de verrouiller le frein de stationnement et une intention de la part du conducteur de déverrouiller le frein de stationnement. Le module de détection 46 permet alors de déterminer à quel instant et dans quelle mesure un délestage du frein de stationnement peut être mis en œuvre. Le module de détection 46 comprend des premiers moyens de détection 48 dont la fonction est de détecter à l'avance un probable verrouillage du frein de stationnement et d'identifier l'environnement du véhicule au moment du verrouillage. Le module de détection 46 comprend des deuxièmes moyens de détection 50 ayant pour fonction de détecter à l'avance un probable déverrouillage du frein de stationnement 26.

Les premiers moyens de détection 48 comprennent un bloc de réception 52 de l'intensité de freinage par le dispositif de freinage 28. Dans l'exemple illustré, le bloc 52 est en liaison d'information avec un détecteur (non représenté) déterminant l'intensité de freinage. Le détecteur peut comprendre tout moyen logiciel et matériel choisi parmi un capteur déterminant la pression exercée par un conducteur sur une pédale de frein, un détecteur déterminant si le conducteur exerce une pression sur une pédale de frein, un détecteur de la pression hydraulique ou pneumatique consommée par le dispositif de freinage 28 ou encore un capteur de la puissance électrique récupérée par freinage régénératif par la machine électrique 16. Le bloc de réception 52 est spécialement conçu pour détecter une intensité de freinage typique préalable à un verrouillage du frein de stationnement. Pour ce faire, le bloc de réception 52 peut comprendre des moyens pour comparer l'intensité de freinage mesurée avec une valeur de seuil prédéterminée. Avantageusement, le bloc 52 peut aussi être couplé avec un minuteur. Il est alors détecté une intensité de freinage typique lorsque l'intensité de freinage mesurée dépasse la valeur de seuil pendant un seuil de temps prédéterminé, par exemple 0.5 seconde.

Les premiers moyens de détection 48 comprennent par ailleurs un bloc de réception 54 d'une information d'accélération du véhicule. Le bloc 54 est en liaison d'information avec un accéléromètre (non représenté). Le bloc de réception 54 comprend en particulier des moyens matériels et logiciels pour détecter une décélération importante suivie d'un arrêt du véhicule.

Les premiers moyens de détection 48 comprennent par ailleurs un bloc de réception 56 d'une localisation du véhicule. En l'espèce, le bloc de réception 56 est en liaison d'information avec le dispositif de localisation par satellite 32. Le bloc 56 est particulièrement configuré pour détecter si le véhicule est localisé dans un environnement propice au verrouillage du frein de stationnement 26. Le bloc 56 peut également être configuré pour recevoir une information de pente d'une surface sur laquelle le véhicule est arrêté.

Les premiers moyens de détection 48 comprennent ensuite un bloc de réception 58 du sens de détection des roues du véhicule. Le bloc de réception 58 peut être en liaison d'information avec un capteur de la rotation des roues du véhicule 2 (non représenté).

Les deuxièmes moyens de détection 50 comprennent un bloc de réception 60 d'une information de mise sous tension d'instruments de contrôle du véhicule. Par exemple, le bloc de réception 60 peut être en liaison d'information avec l'ordinateur de bord 34 et/ou l'interface de pilotage 30 du véhicule 2. Le bloc 60 émet un signal d'alerte lorsqu'au moins l'un des instruments de contrôle n'est pas allumé.

Les moyens 50 comprennent un bloc de réception 62 d'une activation d'un mode dégradé des instruments de contrôle du véhicule. Comme le bloc de réception 60, le bloc 62 peut être en liaison d'information avec l'ordinateur de bord 34 et/ou l'interface de pilotage 30. Le bloc 62 émet un signal d'alerte lorsqu'au moins l'un des instruments de contrôle est en mode dégradé.

Les moyens 50 comprennent un bloc de réception 64 d'un effort transmis par le conducteur au levier de commande du frein de stationnement. Pour ce faire, le bloc de réception 64 peut être en liaison d'information avec un capteur d'effort (non représenté) relié au levier de commande de l'interface 30.

Les moyens 50 comprennent en outre un bloc de réception 66 d'un effort fourni par le moteur d'actionnement du frein de stationnement. Par exemple, le bloc de réception 66 peut être en liaison d'information avec un capteur d'effort (non représenté) relié à l'arbre moteur du moteur d'actionnement du frein de stationnement 26. Le bloc de réception 46 peut également être couplé à un capteur de la puissance électrique d'alimentation du moteur d'actionnement du frein de stationnement 26.

Le dispositif de contrôle 36 comporte un module de détermination 68 qui a pour fonction de déterminer des paramètres relatifs à l'effort de délestage qui va être appliqué au frein de stationnement.

Le module 68 comprend un module d'évaluation 70 d'un couple d'équilibre C_{eq}. Le couple C_{eq} correspond au couple opposé au couple de freinage mis en œuvre par le dispositif de freinage 28, immédiatement avant le verrouillage du frein de stationnement 26 et rapporté en amont de la transmission 20, au niveau de la machine électrique 16. En d'autres termes, le couple C_{eq} correspond au couple pouvant être mis en œuvre par la machine électrique 16 pour annuler exactement le couple de freinage mis en œuvre par le dispositif de freinage 28 avant verrouillage du frein de stationnement 26.

Pour ce faire, le module d'évaluation 70 comprend un capteur d'effort 71 qui mesure la force de freinage F_{Freinage} mise en œuvre par le dispositif de freinage 28. Le détecteur 71 mesure la force moyenne entre un instant de début de détection d'une intention du conducteur de verrouiller le frein de stationnement 26, et le verrouillage effectif du frein de stationnement 26.

Le module 70 comprend un bloc de calcul 72 capable de déduire de la force F_{Freinage} le couple de freinage C_{Freinage} correspondant. Le calculateur 72 applique la relation :
*C_{Freinage}*=*rᵣₒᵤₑₛ·F_{Freinage}*, où rᵣₒᵤₑₛ correspond au rayon des roues motrices du véhicule.

Le module 70 comprend encore un bloc de calcul 73 capable de rapporter le couple de freinage C_{Freinage} en amont de la transmission 20. En d'autres termes, le calculateur 73 calcule le couple rapporté C_{Rapporté}, exercé sur l'arbre moteur de la machine électrique 16, équivalent au couple de freinage C_{Freinage}. Le couple rapporté C_{Rapporté} est calculé comme suit :
*C_{Rapporté}*=*k*₂₂*·k*₂₄*·C_{Freinage}*, où k₂₄ est le rapport de réduction du réducteur 24 et k₂₂ est le rapport de transmission de la boîte de vitesses 22, entre l'arbre moteur de la machine électrique 16 et l'arbre de sortie 23. Le couple rapporté C_{Rapporté} correspond à la valeur absolue du couple d'équilibre C_{eq}.

Le module 70 comporte un bloc de calcul 74 capable d'orienter le couple rapporté C_{Rapporté}, selon l'angle de la pente dans laquelle le véhicule a été stationné. De manière générale, le couple rapporté C_{Rapporté} est orienté par le bloc de calcul 74 de manière à faire tourner les roues motrices du véhicule 2 en sens inverse du sens dans lequel elles étaient amenées à tourner immédiatement avant verrouillage du frein de stationnement 26. Dans l'exemple illustré, le calculateur 74 donne au couple rapporté C_{Rapporté} une valeur positive si la pente est positive ou une valeur négative si la pente est négative. Pour déterminer le sens de la pente, le calculateur 74 peut utiliser les informations reçues par les blocs de réception 54 et 58, à savoir l'accélération et le sens de rotation des roues, immédiatement avant verrouillage du frein de stationnement. Le couple calculé par le bloc 74 correspond au couple d'équilibre C_{eq}.

Le module de détermination comprend un bloc de calcul 75 d'un couple d'hyperstatisme C_{Hyp}. Le couple C_{Hyp} est calculé comme suit :
*C_{Hyp}*=*C_{eq}·k_{Hyp}*, où k_{Hyp} est le coefficient d'hyperstatisme. Le coefficient d'hyperstatisme peut être déterminé à partir de divers paramètres relatifs au véhicule et à ses conditions nominales d'utilisation du frein de stationnement. Par exemple, le coefficient d'hyperstatisme k_{Hyp} peut être déterminé en tenant compte du couple de torsion des arbres de l'ensemble réducteur situé entre le frein de stationnement et le différentiel, de la torsion des arbres de transmission et/ou de la torsion du groupe motopropulseur par l'effet élastique de ses supports, lorsque le frein de stationnement est verrouillé dans des conditions de forte sollicitation. En tenant compte de tous ces éléments, il est possible d'évaluer précisément le coefficient d'hyperstatisme k_{Hyp}. Dans l'exemple illustré, le coefficient d'hyperstatisme k_{Hyp} est compris entre 1,001 et 1,1.

Le module de détermination 68 comprend un module de mémorisation 76 du couple d'hyperstatisme C_{Hyp}. Le module de mémorisation 76 est conçu pour mémoriser la valeur du couple C_{Hyp} dès que le frein de stationnement 26 est verrouillé.

Le module de détermination 68 comprend en outre un module de réinitialisation 77 de la valeur mémorisée par le module de mémorisation 76. Le module de réinitialisation 77 est plus particulièrement configuré pour réinitialiser la valeur mémorisée dès que le levier de commande du frein de stationnement est dans une position différente de sa position d'actionnement, qu'un des instruments de contrôle est en mode dégradé ou que la réserve d'énergie de la machine électrique 16 est inférieure à un seuil prédéterminé.

Le dispositif de contrôle 36 comporte un module de délestage 80. Le module de délestage 80 a pour fonction de piloter l'actionnement de l'effort de délestage du frein de stationnement 26. Pour ce faire, le module de délestage 80 est capable d'émettre un signal de délestage S_{Délestage} adressé à la machine électrique 16. Lorsque la machine électrique 16 reçoit le signal S_{Délestage}, elle fournit de la puissance mécanique à la boîte de vitesses 22. Cette énergie mécanique est alors transmise, par l'intermédiaire de l'arbre 23 et du réducteur 24, à l'essieu 10. Il en résulte une moindre sollicitation du frein de stationnement 26. De manière avantageuse, le signal S_{Délestage} peut prendre une pluralité de valeurs, chaque valeur correspondant à une quantité d'énergie mécanique différente devant être fournie par la machine électrique 16. De préférence, le signal S_{Délestage} prend n'importe quelle valeur dont la valeur absolue est comprise entre zéro et le couple maximal pouvant être fourni par la machine électrique 16, la machine électrique 16 délivrant un couple de valeur égale à celle du signal S_{Délestage}. Dans l'exemple qui est représenté, le signal S_{Délestage} a une valeur égale à celle de C_{Hyp}.

Au moyen du dispositif de contrôle qui vient d'être décrit, on met en œuvre le procédé de contrôle suivant.

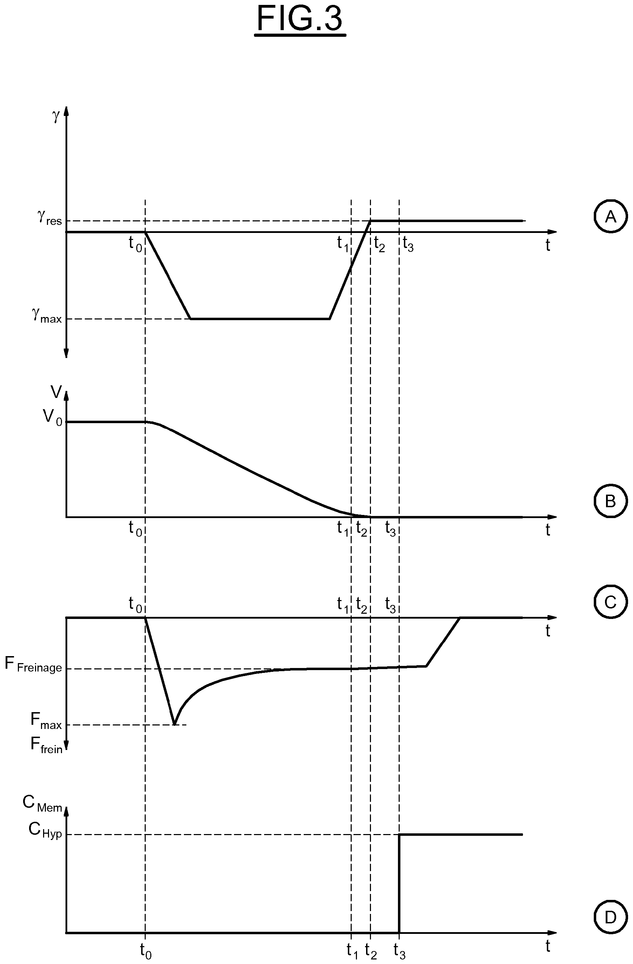

Le procédé comprend une première étape de détermination d'un contexte de verrouillage du frein de stationnement 26 et de calcul du couple correspondant à l'effort de délestage qui sera mis en œuvre au cours du prochain déverrouillage du frein de stationnement 26. La première étape sera décrite en référence à la figure 3 qui illustre le comportement temporel, au cours d'une décélération du véhicule 2 et du verrouillage du frein de stationnement 26, des paramètres suivants :
- la courbe A illustre l'évolution de l'accélération y du véhicule 2,
- la courbe B illustre l'évolution de la vitesse V du véhicule,
- la courbe C illustre l'évolution de l'effort F_{Frein} de freinage, et
- la courbe D illustre la valeur de couple C_{Mem} mémorisée par le module 76.

On a schématiquement représenté sur les axes des abscisses des courbes 1 à 4 un instant to de début d'actionnement du dispositif de freinage 28 du véhicule 2, un instant t₁ de détection du début d'un contexte de verrouillage du frein de stationnement 26, un instant t₂ d'arrêt du véhicule et un instant t₃ de verrouillage effectif du frein de stationnement 26.

L'instant to correspond au début de l'actionnement du dispositif de freinage 28 par le conducteur. Il en résulte l'apparition d'une décélération qui augmente progressivement puis se stabilise autour d'une valeur égale à γₘₐₓ. La vitesse V du véhicule diminue alors de manière linéaire jusqu'à une valeur presque nulle. La décélération subie par le véhicule se rapproche alors de nouveau de zéro. Dans le même temps, un effort F_{Frein} de freinage négatif est appliqué par le dispositif de freinage 28. L'effort de freinage progresse de manière linéaire jusqu'à un effort de freinage maximal Fₘₐₓ. L'effort de freinage décroît ensuite selon une courbe parabolique concave jusqu'à une valeur de freinage résiduel F_{Freinage}, qui correspond à la force de freinage nécessaire pour maintenir le véhicule 2 à l'arrêt avant le verrouillage du frein de stationnement 26.

À l'instant t₁, il est détecté le début d'un contexte de verrouillage du frein de stationnement 26. Pour détecter ce contexte, on utilise les données reçues par les blocs de réception 52, 54, 56 et 58. On recoupe ces informations de manière à détecter une décélération caractéristique d'une volonté du conducteur d'arrêter le véhicule et d'actionner le frein de stationnement 26.

A un instant t₂ situé peu de temps après l'instant t₁, le véhicule 2 est immobilisé. Lorsque le véhicule est à l'arrêt, il est mesuré une accélération résiduelle γᵣₑₛ positive si le véhicule 2 est stationné en pente selon un angle négatif, c'est-à-dire stationné en descente, et négative si le véhicule 2 est stationné en pente selon un angle positif, c'est-à-dire stationné en montée.

À un instant t₃, le frein de stationnement 26 est verrouillé. À cet instant, on calcule la valeur du couple d'hyperstatisme C_{Hyp} en utilisant le module de détermination 68. Pour calculer le couple d'hyperstatisme C_{Hyp}, on utilise le module de détermination 68. Ainsi, comme indiqué sur la figure 3, le couple d'hyperstatisme C_{Hyp} prend une valeur proportionnelle à une moyenne F_{Freinage} des valeurs prises par la force de freinage F_{Frein} entre les instants t₁ et t₃.

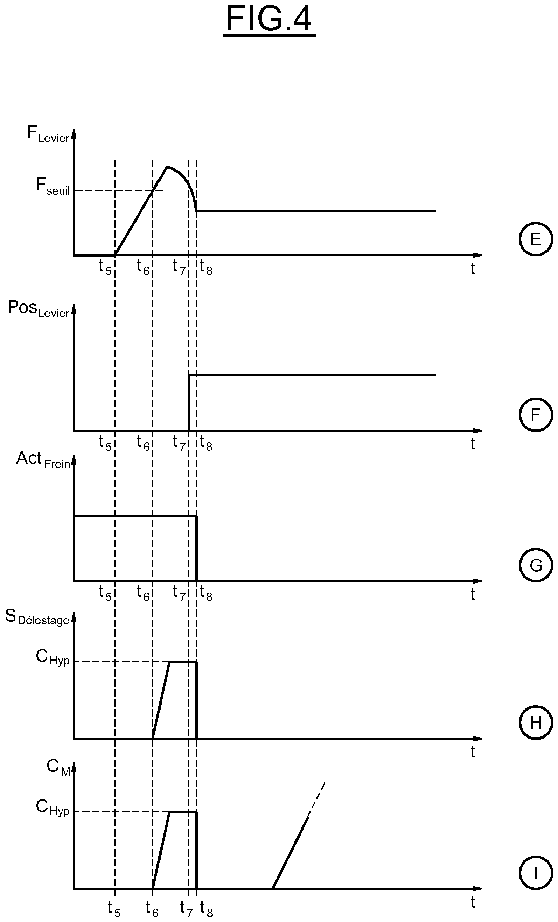

Le procédé comprend une deuxième étape de détection d'un contexte fonctionnel d'intention de l'utilisateur à déverrouiller le frein de stationnement 26. La deuxième étape sera décrite en référence à la figure 4 qui illustre le comportement temporel, au cours d'un déverrouillage du frein de stationnement 26, des paramètres suivants :
- la courbe E illustre l'évolution de la force F_{Levier} exercée par un conducteur sur le levier de commande de l'interface 30,
- la courbe F illustre l'évolution temporelle de la position Pos_{Levier} du levier de commande,
- la courbe G illustre l'évolution temporelle du verrouillage Act_{Frein} du frein de stationnement 26,
- la courbe H illustre l'évolution temporelle de la valeur du signal S_{Délestage}, et
- la courbe I illustre l'évolution temporelle du couple moteur C_{M} délivré par la machine électrique 16.

À un instant t₅, le conducteur exerce un effort sur le levier de commande de l'interface de pilotage 30 pour provoquer son déplacement vers une position différente de la position d'actionnement du

verrouillage du frein de stationnement 26. L'effort F_{Levier} exercé sur le levier de commande croît donc progressivement.

Il est détecté un contexte fonctionnel de déverrouillage du frein de stationnement 26 par l'utilisateur à l'instant t₆ lorsque l'effort F_{Levier} atteint une valeur de seuil Fₛₑᵤᵢₗ. Par ailleurs, le contexte est détecté seulement si, à l'instant t₆, les dispositifs de contrôle du véhicule sont tous sous tension, aucun de ces dispositifs de contrôle n'est en mode dégradé et le frein de stationnement 26 est activé.

Le levier de commande qui est déplacé sous l'effet de l'effort F_{Levier} quitte sa position d'actionnement du verrouillage vers une position différente à un instant t₇ situé après l'instant t₆.

Comme cela est représenté sur la courbe G, le frein de stationnement 26 reste activé jusqu'à un instant t₈ qui se situe peu après l'instant t₇. Après l'instant t₈, le frein de stationnement 26 reste déverrouillé.

Le module de délestage 80 émet un signal de délestage S_{Délestage} entre les instants t₆ et t₈. Plus particulièrement, le signal S_{Délestage} prend la plupart du temps une valeur égale au couple d'hyperstatisme C_{Hyp}. À l'instant t₆, le signal S_{Délestage} passe d'une valeur nulle à la valeur C_{Hyp} en augmentant progressivement selon une pente de valeur constante a. Dans l'exemple de réalisation illustré, la valeur du coefficient a de la pente est compris entre 200 N.m/s et 2000 N.m/s. Cette plage de valeurs est particulièrement adaptée à des véhicules automobiles de masse à vide comprise entre 1500kg et 2500kg. À l'instant t₈, le signal S_{Délestage} passe quasiment instantanément de la valeur C_{Hyp} à une valeur nulle. Il en résulte une meilleure efficacité du délestage mis en œuvre. Comme cela est représenté sur la figure I, le couple moteur délivré par la machine électrique 16 suit le signal S_{Délestage}. La variation du couple moteur C_{M} qui apparaît longtemps après t₈ correspond à un couple commandé par le contrôle moteur du véhicule 2 et destiné à provoquer la mise en mouvement du véhicule 2.

Ainsi, grâce au procédé qui vient d'être décrit, la machine électrique 16 applique un couple d'hyperstatisme en entrée de la transmission 20, lorsqu'il est détecté un contexte de déverrouillage du frein de stationnement 26. Le couple d'hyperstatisme est spécialement calculé pour équilibrer le couple mis en œuvre par le frein de stationnement 26 pour immobiliser le véhicule. Plus précisément, le couple d'hyperstatisme est déterminé pour surpasser légèrement le couple mis en œuvre par le frein de stationnement 26.

Il en résulte un meilleur équilibre des pièces mécaniques au cours du déverrouillage du frein de stationnement 26. En particulier, le déverrouillage est mis en œuvre plus facilement, et n'entraîne pas une brusque mise en mouvement des éléments de chaîne cinématique du véhicule 2.

Cela vient diminuer le risque de casse des composants mécaniques constituant cette chaîne cinématique. Par ailleurs, cela permet d'atténuer le bruit généralement entendu lors du déverrouillage du frein de stationnement en forte contrainte. Enfin, il n'est plus nécessaire de surdimensionner les divers éléments d'actionnement du frein de stationnement et on diminue le risque de destruction de ces éléments d'actionnement.

De même, lorsque le frein de stationnement est à commande manuelle et est contrôlé à cet effet par des câbles directement reliés au levier de commande, on diminue l'effort devant être mis en œuvre par le conducteur pour modifier la position du levier de commande, et on limite le risque de casse des câbles, du frein de parking ou du levier de commande.

En particulier, grâce aux moyens de détection d'une intention de la part de l'utilisateur de verrouillage du frein de stationnement, il est possible de détecter un contexte de verrouillage du frein de stationnement et d'identifier l'environnement dans lequel ce verrouillage s'effectue. On identifie alors comment il est possible de mettre en œuvre un délestage efficace du frein de stationnement. Grâce aux moyens de détection d'une intention de la part du conducteur de déverrouillage du frein de stationnement, on détermine facilement quand ce délestage doit être mis en œuvre.

## Revendications

1. Dispositif de contrôle (36) d'un frein de stationnement (26) de véhicule automobile (2) comprenant un groupe motopropulseur (14) doté d'au moins un moteur choisi parmi une machine électrique (16), un moteur hydraulique et un moteur pneumatique, un module de pilotage (78) du frein de stationnement (26) apte à bloquer le mouvement d'un élément (10) de chaîne cinématique du véhicule (2), une interface de contrôle (30) avec un utilisateur, un module de détection (46) capable de détecter une intention du conducteur de verrouiller le frein de stationnement et une intention du conducteur de déverrouiller le frein de stationnement, et des moyens de délestage (80, 16) qui comprennent ledit moteur aptes à fournir un effort à un deuxième élément de chaîne cinématique lors du déverrouillage du frein de stationnement, les moyens de délestage comprenant en outre un module de détermination (68) de paramètres relatifs au véhicule automobile (2) et/ou de paramètres relatifs à un groupe motopropulseur (14) du véhicule automobile (2), les moyens de délestage (80, 16) comprenant un module de calcul apte à déterminer l'effort à appliquer à l'élément de chaîne cinématique en fonction des paramètres déterminés par le module de détermination (68),
**caractérisé en ce que** le module de détermination (68) comprend un module d'évaluation (70) d'un couple de freinage apte à évaluer un couple de freinage (C_{Rapporté}) rapporté en entrée de réducteur (24) et appliqué immédiatement avant le verrouillage du frein de stationnement (26), et un module de mémorisation (76) capable de mémoriser le couple de freinage (C_{Rapporté}) évalué par le module d'évaluation (70) et un module de réinitialisation (77) apte à réinitialiser le module de mémorisation (76).

2. Dispositif (36) selon la revendication 1, dans lequel le module de détection (46) comprend un premier moyen de détection (48) d'une intention de la part de l'utilisateur de verrouillage du frein de stationnement, ledit premier moyen de détection (48) étant apte à recevoir au moins un signal choisi parmi un signal d'intensité de freinage, un signal d'accélération, un signal de localisation par satellite et un signal de sens de rotation des roues du véhicule.

3. Dispositif (36) selon la revendication 1 ou 2, dans lequel le module de détection (46) comprend un deuxième moyen de détection (50) d'une intention de la part de l'utilisateur de déverrouillage du frein de stationnement, ledit deuxième moyen de détection (50) étant apte à recevoir au moins un signal choisi parmi un signal de mise sous tension d'instruments de contrôle du véhicule, un signal d'activation d'un mode dégradé des instruments de contrôle du véhicule, un signal représentatif d'un effort transmis aux moyens d'actionnement et/ou à l'interface de contrôle.

4. Dispositif (36) selon l'une quelconque des revendications 1 à 3, dans lequel les moyens de délestage (80, 16) sont capables de fournir un effort de contrainte hyperstatique au deuxième élément de chaîne cinématique.

5. Dispositif (36) selon l'une des revendications précédentes, dans lequel le module d'évaluation (70) comprend des premiers moyens d'évaluation (71) d'une force de freinage (F_{Freinage}) appliquée immédiatement avant le verrouillage du frein de stationnement (26), des deuxièmes moyens d'évaluation (72) capables de déterminer un couple de freinage (C_{Freinage}) appliqué directement sur un élément (10) de chaîne cinématique à partir de la force de freinage (F_{Freinage}) évaluée par les premiers moyens d'évaluation (71), et des troisièmes moyens d'évaluation (73) capables de calculer un couple en entrée de réducteur (C_{Rapporté}) à partir du couple de freinage (C_{Freinage}) déterminé par les deuxièmes moyens d'évaluation (72).

6. Dispositif (36) selon l'une des revendications précédentes, dans lequel le module de réinitialisation (77) est configuré pour réinitialiser la valeur mémorisée par le module de mémorisation (76) chaque fois que le module de détection (46) détecte une mise en mouvement du véhicule automobile (2).

7. Procédé de contrôle d'un dispositif (36) selon l'une quelconque des revendications 1 à 6, dans lequel on détecte une intention de la part du conducteur de verrouiller le frein de stationnement (26), on détecte une intention de la part du conducteur de déverrouiller le frein de stationnement (26), on fournit un effort au deuxième élément de chaîne cinématique en vue du délestage du frein de stationnement (26) entre l'instant (t₆) de détection de l'intention de la part du conducteur de déverrouiller et l'instant (t₈) de déverrouillage effectif du frein de stationnement (26).

## Patentansprüche

1. Steuervorrichtung (36) für eine Feststellbremse (26) eines Kraftfahrzeugs (2), beinhaltend eine Antriebseinheit (14), die über mindestens einen Motor, der aus einer elektrischen Maschine (16), einem Hydraulikmotor und einem Druckluftmotor ausgewählt ist, verfügt, ein Modul zur Ansteuerung (78) der Feststellbremse (26), das dazu fähig ist, die Bewegung eines Elements (10) der kinematischen Kette des Fahrzeugs (2) zu sperren, eine Steuerschnittstelle (30) zu einem Benutzer, ein Detektionsmodul (46), das dazu fähig ist, eine Absicht des Fahrers, die Feststellbremse zu verriegeln, und eine Absicht des Fahrers, die Feststellbremse zu entriegeln, zu detektieren, und Entlastungsmittel (80, 16), die den Motor beinhalten und dazu fähig sind, einem zweiten Element der kinematischen Kette beim Entriegeln der Feststellbremse eine Kraft bereitzustellen, wobei die Entlastungsmittel ferner ein Modul zur Bestimmung (68) von Parametern über das Kraftfahrzeug (2) und/oder von Parametern über eine Antriebseinheit (14) des Kraftfahrzeugs (2) beinhalten, wobei die Entlastungsmittel (80, 16) ein Berechnungsmodul beinhalten, das dazu fähig ist, in Abhängigkeit von den durch das Bestimmungsmodul (68) bestimmten Parametern die auf das Element der kinematischen Kette anzuwendende Kraft zu bestimmen,
**dadurch gekennzeichnet, dass** das Bestimmungsmodul (68) Folgendes beinhaltet: ein Modul zur Ermittlung (70) eines Bremsmoments, das dazu fähig ist, ein Bremsmoment (C_{Aufgebracht}), das am Eingang eines Untersetzungsgetriebes (24) aufgebracht wird und direkt vor der Verriegelung der Feststellbremse (26) angewendet wird, zu ermitteln, und ein Speichermodul (76), das dazu fähig ist, das Bremsmoment (C_{Aufgebracht}), das von dem Ermittlungsmodul (70) ermittelt wurde, zu speichern, und ein Rücksetzmodul (77), das dazu fähig ist, das Speichermodul (76) zurückzusetzen.

2. Vorrichtung (36) nach Anspruch 1, wobei das Detektionsmodul (46) ein erstes Mittel zum Detektieren (48) einer Absicht seitens des Benutzers, die Feststellbremse zu verriegeln, beinhaltet, wobei das erste Detektionsmittel (48) dazu fähig ist, mindestens ein Signal zu empfangen, das aus einem Bremsstärkesignal, einem Beschleunigungssignal, einem Satellitenortungssignal und einem Signal bezüglich der Drehrichtung der Räder des Fahrzeugs ausgewählt ist.

3. Vorrichtung (36) nach Anspruch 1 oder 2, wobei das Detektionsmodul (46) ein zweites Mittel zum Detektieren (50) einer Absicht seitens des Benutzers, die Feststellbremse zu entriegeln, beinhaltet, wobei das zweite Detektionsmittel (50) dazu fähig ist, mindestens ein Signal zu empfangen, das aus einem Einschaltsignal der Steuerinstrumente des Fahrzeugs, einem Aktivierungssignal eines Notbetriebs der Steuerinstrumente des Fahrzeugs, einem Signal, das für eine auf die Betätigungsmittel und/oder die Steuerschnittstelle übertragene Kraft repräsentativ ist, ausgewählt ist.

4. Vorrichtung (36) nach einem der Ansprüche 1 bis 3, wobei die Entlastungsmittel (80, 16) dazu fähig sind, dem zweiten Element der kinematischen Kette eine statisch überbestimmte Spannkraft bereitzustellen.

5. Vorrichtung (36) nach einem der vorhergehenden Ansprüche, wobei das Ermittlungsmodul (70) Folgendes beinhaltet: erste Mittel zur Ermittlung (71) einer Bremskraft (F_{Brems}), die direkt vor der Verriegelung der Feststellbremse (26) angewendet wird, zweite Ermittlungsmittel (72), die dazu fähig sind, ein Bremsmoment (C_{Brems}), das direkt auf ein Element (10) der kinematischen Kette angewendet wird, auf Basis der durch die ersten Ermittlungsmittel (71) ermittelten Bremskraft (F_{Brems}) zu bestimmen, und dritte Ermittlungsmittel (73), die dazu fähig sind, ein Moment am Eingang eines Untersetzungsgetriebes (C_{Aufgebracht}) auf Basis des durch die zweiten Ermittlungsmittel (72) bestimmten Bremsmoments (C_{Brems}) zu berechnen.

6. Vorrichtung (36) nach einem der vorhergehenden Ansprüche, wobei das Rücksetzmodul (77) dazu konfiguriert ist, den durch das Speichermodul (76) gespeicherten Wert jedes Mal zurückzusetzen, wenn das Detektionsmodul (46) detektiert, dass das Kraftfahrzeug (2) in Bewegung gesetzt wird.

7. Steuerverfahren für eine Vorrichtung (36) nach einem der Ansprüche 1 bis 6, wobei eine Absicht seitens des Fahrers, die Feststellbremse (26) zu verriegeln, detektiert wird, eine Absicht seitens des Fahrers, die Feststellbremse (26) zu entriegeln, detektiert wird, dem zweiten Element der kinematischen Kette eine Kraft bereitgestellt wird, um die Feststellbremse (26) zwischen dem Zeitpunkt (t₆) der Detektion der Absicht seitens des Fahrers zur Entriegelung und dem Zeitpunkt (t₈) der tatsächlichen Entriegelung der Feststellbremse (26) zu entlasten.

## Claims

1. Control device (36) for a parking brake 26) of a motor vehicle (2) comprising a powertrain (14) equipped with at least one motor chosen from among an electric machine (16), a hydraulic motor and a pneumatic motor, a module (78) for controlling the parking brake (26) that is able to block the movement of a drivetrain element (10) of the vehicle (2), a control interface (30) with a user, a detection module (46) capable of detecting an intention by the driver to lock the parking brake and an intention by the driver to unlock the parking brake, and unloading means (80, 16) which comprise said motor and are able to provide a force to a second drivetrain element during the unlocking of the parking brake, the unloading means further comprising a determination module (68) for determining parameters relating to the motor vehicle (2) and/or parameters relating to a powertrain (14) of the motor vehicle (2), the unloading means (80, 16) comprising a computing module capable of determining the force to be applied to the drivetrain element as a function of the parameters determined by the determination module (68),
**characterized in that** the determination module (68) comprises a braking torque evaluation module (70) capable of evaluating a braking torque (C_{Transmitted}) transmitted on the input side of the reduction gear (24) and applied immediately before the locking of the parking brake (26), and a storage module (76) capable of storing the braking torque (C_{Transmitted}) evaluated by the evaluation module (70), and a reinitialization module (77) capable of reinitializing the storage module (76).

2. Device (36) according to Claim 1, in which the detection module (46) comprises a first detection means (48) for detecting an intention on the part of the user to lock the parking brake, said first detection means (48) being capable of receiving at least one signal chosen from among a braking intensity signal, an acceleration signal, a satellite location signal, and a vehicle wheel direction of rotation signal.

3. Device (36) according to Claim 1 or 2, in which the detection module (46) comprises a second detection means (50) for detecting an intention on the part of the user to unlock the parking brake, said second detection means (50) being capable of receiving at least one signal chosen from among a signal of switching on control instruments of the vehicle, a signal of activating a degraded mode of the control instruments of the vehicle, a signal representative of a force transmitted to the actuating means and/or to the control interface.

4. Device (36) according to any one of Claims 1 to 3, in which the unloading means (80, 16) are capable of providing a hyperstatic stress force to the second drivetrain element.

5. Device (36) according to one of the preceding claims, in which the evaluation module (70) comprises first evaluation means (71) for evaluating a braking force (F_{Braking}) applied immediately before the locking of the parking brake (26), second evaluation means (72) capable of determining a braking torque (C_{Braking}) applied directly to a drivetrain element (10) from the braking force (F_{Braking}) evaluated by the first evaluation means (71), and third evaluation means (72) capable of calculating a torque on the input side of the reduction gear (C_{Transmitted}) from the braking torque (C_{Braking}) determined by the second evaluation means (72).

6. Device (36) according to one of the preceding claims, in which the reinitialization module (77) is configured to reinitialize the value stored by the storage module (76) each time the detection module (46) detects a setting in motion of the motor vehicle (2).

7. Method of control of a device (36) according to any one of Claims 1 to 6, in which an intention on the part of the driver to lock the parking brake (26) is detected, an intention on the part of the driver to unlock the parking brake (26) is detected, and a force is provided to the second drivetrain element for the purpose of unloading the parking brake (26) between the instant (t₆) of detecting the intention on the part of the driver to unlock and the instant (t₈) of actual unlocking of the parking brake (26).
